Europäisches Patentamt

European Patent Office

Office européen des brevets

(19)

(11) Veröffentlichungsnummer: 0 193 096

A2

## EUROPÄISCHE PATENTANMELDUNG

(21) Anmeldenummer: 86102149.1

(22) Anmeldetag: 19.02.86

(51) Int. Cl.⁴: G06F 13/12

(30) Priorität: 25.02.85 US 705457

(43) Veröffentlichungstag der Anmeldung:
03.09.86 Patentblatt 86/36

(84) Benannte Vertragsstaaten:
CH DE FR GB IT LI NL

(71) Anmelder: International Standard Electric
Corporation
320 Park Avenue
New York New York 10022(US)

(72) Erfinder: Gerety, Eugene Peter
18 Longmeadow Drive
Wolcott, CT 06716(US)
Erfinder: Yanosy, John Anthony, Jr.
60 Russell Road
Stratford, CT 06497(US)
Erfinder: Vij, Jitender Kumar
353 Putting Green Road
Trumbull, CT 06611(US)

(74) Vertreter: Villinger, Bernhard, Dipl.-Ing. et al
Standard Elektrik Lorenz AG Patent- und
Lizenzwesen Postfach 300 929 Kurze Strasse 8
D-7000 Stuttgart 30(DE)

(54) Schnittstellenbaustein.

(57) Die Erfindung betrifft einen Schnittstellenbaustein (10) der einen Mikrocomputer (12) und einen Speicher (20) aufweist.

Der Schnittstellenbaustein (10) enthält eine Geräteanschlußschaltung (14) und eine Busanschlußschaltung (16), wobei der Mikrocomputer (12) über eine erste Speichertorzugriffssteuerung (22) und über zwei Unterbrechungsanforderungsleitungen (40, 42) sowie zwei Kanalabrufleitungen (44, 46) mit der Geräteanschlußschaltung (14) bzw. der Busanschlußschaltung (16) verbunden ist.

Die Geräteanschlußschaltung (14) ist über einen Bus (56) mit einer Vielzahl von peripheren Endgeräten (58) und über eine zweite Speichertorzugriffssteuerung (24) mit dem Speicher (20) verbunden.

Ferner ist die Busanschlußschaltung (16) über eine Busschnittstelle (18) mit einem Nachrichtenbus (18) und über eine dritte Speichertorzugriffssteuerung (26) mit dem Speicher (20) verbunden. Die Reihenfolge des Zugriffs auf den Speicher (20) wird durch einen Torwähler gesteuert.

FIG. 1

Rank Xerox

Schnittstellenbaustein

Die Erfindung betrifft einen Schnittstellenbaustein, der einen Mikrocomputer und einen Speicher aufweist. In heutigen Datenübertragungssystemen werden Schnittstellenbausteine benutzt, die in ihrer Datenübertragungskapazität und Flexibilität stark begrenzt sind. Solche Schnittstellenbausteine können, oder nicht, mit anderen Schnittstellenbausteinen Daten austauschen. Ein typischer Schnittstellenbaustein enthält einen Mikroprozessor, der mit einem oder mehreren Endgeräten verbunden ist, z.B. eine synchrone Datenaustauschsteuerung und eine Direktspeicherzugriffssteuerung der DMA-Steuerung. Diese sind gewöhnlich mit einem Bus des Mikroprozessors direkt verbunden.

Um Daten über ein solches System senden oder empfangen zu können, ist das Endgerät mit der notwendigen Information zur Datenübertragung und die DMA-Steuerung mit Informationen über die Quelle oder den Bestimmungsort für die zu übertragenden Daten programmiert. Das Endgerät signalisiert die Bereitschaft Daten zu übertragen zur DMA-Steuerung, worauf diese eine Anforderung zum Mikroprozessor für eine zeitweilige Steuerung des Busses sendet. Wenn der Mikroprozessor seine gerade laufende Benutzung des Busses beendet hat, erhält die DMA-Steuerung eine freigabe für den Bus, so daß jetzt die notwendigen Steuer-und Adressensignale durch die DMA-Steuerung erzeugt werden, um den angeforderten Datenaustausch zu oder von dem Speicher des Mikroprozessors von bzw. zu dem Engerät durchzuführen.

Nach abgeschlossenem Datenaustausch wird entweder durch die DMA-Steuerung und durch das Endgerät dies dem Mikroprozessor durch ein Unterbrechungssignal angezeigt. Nach einem Datensendeablauf ist bis zum nächsten Datenaustausch keine weitere Operation notwendig. Falls jedoch Daten empfangen wurden, muß der Mikroprozessor um ein Verlieren von folgenden Daten zu verbinden, die DMA-Steuerung reprogrammieren und das Endgerät wird vor dem nächsten Datenaustausch initialisiert. Da der Mikroprozessor keinen Einfluß auf den Zeitpunkt hat, zu dem neue Daten kommen, ist die darauf erforderliche Antwortzeit durch externe Faktoren bestimmt.

Es treten dann Probleme auf, wenn die Länge des Datenaustausches kurz oder aufeinanderfolgende Datenübertragungen zeitlich eng benachbart sind, so daß die Mikroprozessorunterbrechungen sehr schnell aufeinander folgen. Dadurch wird die Fähigkeit des Mikroprozessors auf solche Anforderungen zu antworten verringert, da für jede Unterbrechung eine gewisse Anzahl von unbedingt notwenigen Befehlsabläufen erforderlich ist. Außerdem bleibt dem Mikroprozessor wenig Prozessorzeit für andere Operationen übrig.Im extremen Fall kann dadurch ein Datenverlust auftreten. Dies insbesondere dann, wenn eine große Anzahl peripherer Endgeräte angeschlossen sind.

Konventionelle Endgeräte weisen ein spezifisches Befehls-und Steuerformat für eine spezifische Aufgabe auf. Solche Endgeräte benötigen unter Umständen kontinuierlichen Datenaustausch mit dem Mikroprozessor, so daß es notwenig ist Kopien und Reformatierungen durchzuführen, wodurch eine zusätzliche Belastung für den Mikroprozessor entsteht.

Die technische Aufgabe gemäß der Erfindung besteht darin einen Schnittstellenbaustein zu realisieren, der diese Nachteile vermeidet.

Diese Aufgabe wird gelöst mit den im Anspruch 1 angegebenen Mitteln.

Weitere vorteilhafte Ausgestaltungen des Gegenstandes der Erfindung sind den Unteransprüchen zu entnehmen.

Ein Ausführungsbeispiel wird im folgenden anhand der Zeichnungen erläutert. Es zeigen:

Figur 1 ein Blockschaltbild des Schnittstellenbausteins gemäß der Erfindung, und

Figur 2 ein Blockschaltbild eines Speichers mit Ansteuerung, wie im Schnittstellenbaustein nach Figur 1 enthalten.

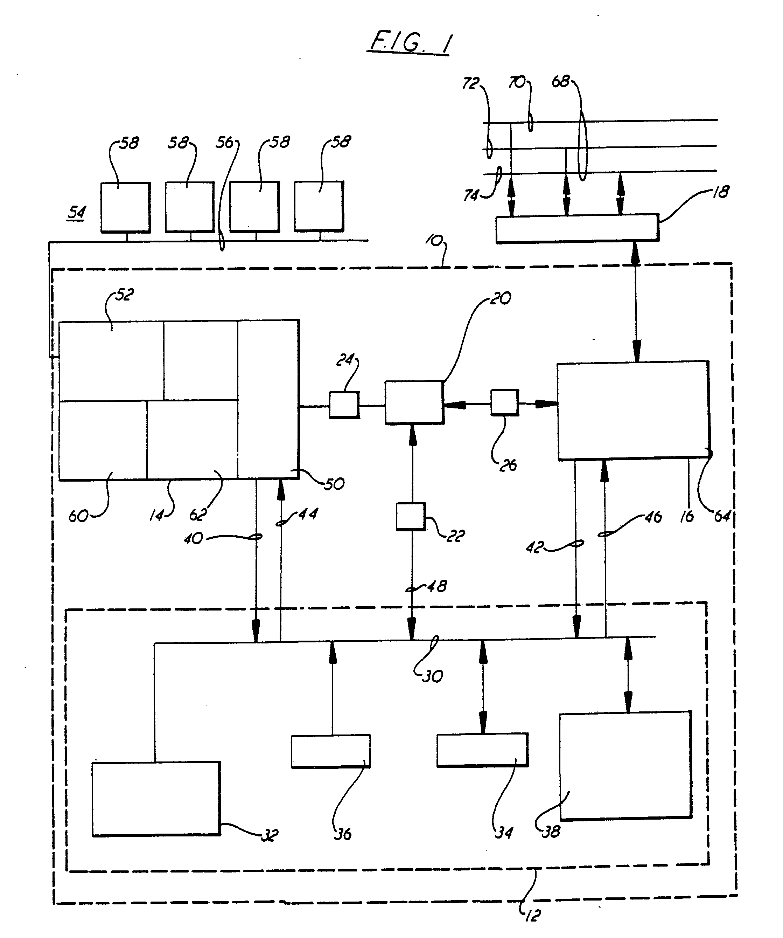

Ein Schnittstellenbaustein 10, wie in Figur 1 gezeigt, enthält eine Vielzahl von Datensende-und Empfangsgeräten, wie z.B. einen Mikrocomputer 12, eine Geräteanschlußschaltung 14, eine Busanschlußschaltung 16 für eine Busschnittstelle 18 und einen Speicher 20. Weiterhin enthält der Schnittstellenbaustein 10 zwischen dem Mikrocomputer 12 und dem Speicher 20 eine erste Speichertorzugriffsteuerung 22, zwischen der Geräteanschlußschaltung 14 und dem Speicher 20 eine zweite Speichertorzugriffssteuerung 24 und zwischen der Busanschlußschaltung 16 und dem Speicher 20 eine dritte Speichertorzugriffssteuerung 26. Zusätzlich enthält der Schnittstellenbaustein 10 einen Torwähler 28 zum Steuern des Nachrichtenaustausches zwischen den Speichertorzugriffssteuerungen 22, 24, 26 und dem Speicher 20.

Der Mikrocomputer 12 enthält einen internen Bus 30, der einen Mikroprozessor 32, einen Direktzugriffsspeicher - (RAM) 34, einen Festspeicher (ROM) 36 und einen Programmspeicher für zusätzliche Dienste 38 untereinander verbindet. Der Mikroprozessor führt alle notwendigen Datenoperationen inklusive aller Befehlsabläufe, die in den Speichern 34, 36 und 38 abgelegt sind, aus. Zusätzlich baut der Mikroprozessor 12 eine Steuerung über den Schnittstellenbaustein 10 auf, in dem er Unterbrechungssignale von der Geräteanschlußschaltung 14 und der Busanschlußschaltung 16 über die Unterbrechungsanforderungsleitung 40 bzw. 42 erhält, Kanalabrufsignale erzeugt und über Kanalabrufleitungen 44 und 46 zu der Geräteanschlußschaltung 14 bzw. der Busanschlußschaltung 16 sendet. Außerdem tauscht der Mikrocomputer 12 direkt mit dem Speicher 20 über die Leitung 48 Unterbrechungs-und Kanalabrufsignale, sowie Daten aus.

Die Geräteanschlußschaltung 14 enthält eine Speicher-und Mikrocomputerschnittstelle 50 die einerseit mit dem Speicher 20 und andererseits über die Leitungen 40 und 44 zum Übertragen von Unterbrechungs-bzw. Kanalabrufsignalen verbunden ist. Ferner weist die Geräteanschlußschaltung 14 eine Geräteschnittstelle 52 auf, die über einen Hochgeschwindigkeitsbus 56 eine Verbindung mit einem steuerbaren Gerät 54, z.B. einer Vielzahl von peripheren Endgeräten 58 herstellt. Dazu enthält die Geräteanschlußschaltung 14 eine geräteunabhängige Programmspeichereinheit 60 und eine gerätespezifische Programmspeichereinheit 62. Die Busanschlußschaltung 16 ist mit dem internen Bus 30 des Mikrocomputers 12 über die Leitungen 42 und 46 zum Übertragen von Unterbrechungs-bzw. Kanalabrufsignalen verbunden. Außerdem tauscht die Busanschlußschaltung 16, wie noch beschrieben wird, Nachrichten mit dem Speicher 20 in beide Richtungen aus.

Ein Nachrichtenbus 68 zum Übertragen von Daten zwischen zu und von anderen Schnittstellenbausteinen 10 enthält einen Datenbus 70, ein zur Kollisionserkennung von Daten dienender Referenzbus 72 und einen Taktsignalbus 74.

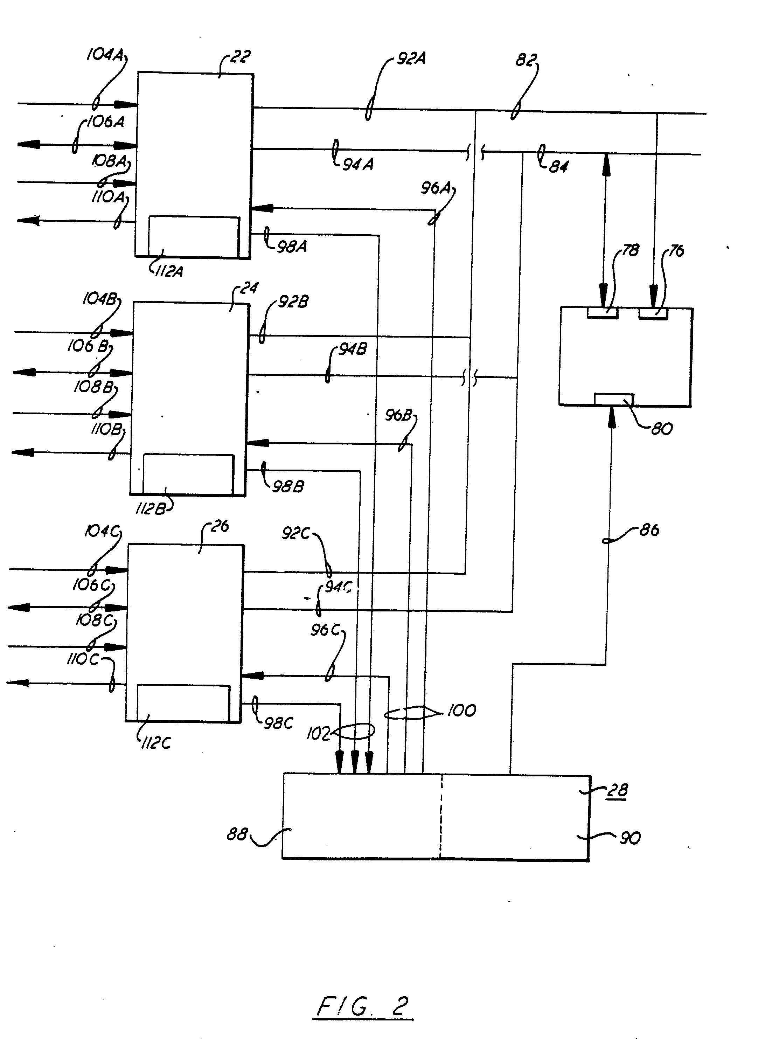

Der Speicher 20, wie in Figur 2 gezeigt, enthält ein Adressentor 76, ein Datentor 78 und ein Steuersignaltor 80. Ferner ist das Adressentor 76 über einen Adressenbus 82 mit der ersten, zweiten und dritten Speichertorzugriffssteuerung 22, 24, 26 verbunden. Ein Datenbus 84 verbindet das Datentor 78 mit den drei Speichertorzugriffsteuerungen 22, 24, 26. Der Torwähler 28 ist über einen Steuersignalbus 86 mit dem Steuersignaltor 80 des Speichers 20 verbunden.

Für den Speicher 20 kann ein Direktzugriffsspeicher RAM, mit einer Speicherkapazität von 32 KBytes gewählt werden. Der Torwähler 28 zum Steuern des Nachrichtenaustausches zwischen den Speichertorzugriffssteuerungen 22, 24, 26 und dem Speicher 20 enthält eine Zugriffssteuerung 88 und einen zugeordneten Taktgenerator 90. Die Zugriffssteuerung 88 ist vorgesehen, um jede Speichertorzugriffssteuerung 22, 24, 26 zyklisch abzufragen - Polling -und dann auf jede Schreib-/Leseanforderung zu antworten. Dabei wird die Zugriffssteuerung 88 mittels des Taktgenerators 90 getaktet. Tatsächlich kann der Taktgenerator 90 auch durch ein Taktsignal ersetzt werden, das von einem Haupttakt über den Taktsignalbus 74 anliegt.

Im Ausführungsbeispiel sind die Speichertorzugriffssteuerungen 22, 24, 26 identisch aufgebaut und enthalten auf der dem Speicher 20 zugeordneten Seite je ein Adressentor 92A, B, C je ein Datentor 94A, B, C, je ein Freigabetor 96A, B, C und je ein Schreib-/Leseanforderungstor 98A, B, C. Dabei tauschen die Adressentore 92A, B, C und die Datentore 94A, B, C mit dem Speicher 20 über den Adressenbus 82 Adressen bzw. über den Datenbus 84 Daten aus. Die Freigabetore 96A, B, C empfangen über Freigabeleitungen 100 Signale von dem Torwähler 28 und die Lese-/Schreibanforderungstore 98A, B, C senden Signale über Lese-/Schreibanforderungsleitungen 102 zu dem Torwähler 28. Ferner enthalten die Speichertorzugriffssteuerungen 22, 24 und 26 auf der dem Mikrocomputer 12, der Speicher-und Mikrocomputerschnittstelle 50 und der Busanschlußschaltung 16 zugeordneten Seite je ein Adressentor 104A, B, C, je ein Datentor 106A, B, C, je ein Steuersignaltor 108A, B, C und je ein Tor 110A, B, C zum Anzeigen, daß die Daten zum Übertragen gültig sind. Außerdem enthält jede Speichertorzugriffssteuerung 22, 24, 26 einen Zwischenspeicher 112A, B, C.

Im Betirebsablauf ruft der Torwähler 28 zyklisch jede Speichertorzugriffssteuerung 22, 24, 26. ab, um eine Schreib-/Leseanforderung zu erkennen. Falls keine Schreib-/Leseanforderung vorliegt wird das zyklische Abrufen durch den Torwähler 28 fortgesetzt, ohne daß die fortlaufenden Betriebszustände des Schnittstellenbausteines 10 beeinflußt werden. Falls nun eine Lese-/Schreibanforderung erkannt wird, z.B. von der Busanschlußschaltung 26 und falls keiner der anderen Speichertorzugriffssteuerungen 22, 24 gerade auf den Speicher 20 zugegriffen haben, wird ein Freigabesignal durch den Torwähler 28 zur dritten Speichertorzugriffssteuerung 26 gesendet. Nach Erhalt eines Freigabesignales legt die dritte Speichertorzugriffssteuerung 26 über den Adressenbus 76 eine Adresse an dem Speicher 20 an und startet Daten in den Speicher 20 einzuschreiben oder aus dem Speicher 20 auszulesen. Der Torwähler 28 ruft weiterhin alle anderen Speichertorzugriffssteuerungen 22, 24, zyklisch ab.

Falls nun eine zweite Schreib-/Leseanforderung durch den Torwähler 28 erkannt wird, die z.B. von der Geräteanschlußschaltung 14 über die zweite Speichertorzugriffssteuerung 24 gesendet wurde, wird der Zugriff auf den Speicher 20 der zweiten und der dritten Speichertorzugriffssteuerung 24, 26 alternierend über alternierende Freigabesignale ermöglicht. Weiterhin wird die erste Speichertorzugriffssteuerung 22 durch den Torwähler 28 abgerufen. Falls nun ein drittes Lese-/Schreibanforderungssignal von dem Mikrocomputer 12 über die erste Speichertorzugriffssteuerung 22 durch den Torwähler 28 erkannt wird, wird ein Zugriff auf den Speicher 20 den Speichertorablaufsteuerungen 22, 24, 26 der Reihe nach ermöglicht, in dem die Freigabesignale fortlaufend den Speichertorzugriffssteuerungen zugeteilt werden. Der Torwählter 28. ist so ausgelegt, daß für den Fall, daß zwei oder mehrere Speichertorzugriffssteuerungen 22, 24, 26 gleichzeitig einen gewünschten Zugriff auf den Speicher 20 anzeigen, jedem während aufeinanderfolgender Zeitintervalle der Zugriff erlaubt wird, wobei eine vorgegebene Maximalzugriffszeit jeder Speichertorzugriffssteuerung 22, 24, 26 garantiert wird. Da die Speichertorzugriffssteuerungen 22, 24, 26 voneinander für alle Funktionen völlig getrennt sind hat ein Datenaustausch zwischen irgend einer gegebenen Speichertorzugriffssteuerung 22, 24, 26 und dem Speicher 20 keinen Einfluß auf einen Datenaustausch zwischen dem Speicher 20 und irgendeiner anderen Speichertorzugriffssteuerung 22, 24, 26.

Da ein Datenaustausch mit dem Spiecher 20 weder kontinuierlich noch immer ohne Verzögerungen abläuft, sind die Zwischenspeicher 112A, B, C vorgesehen, um Daten zeitlich solange zurückzuhalten bis ein Zugriff durch den Torwähler 28 zugeteilt wird.

Ein Abrufzeitintervall wird dabei so gewählt, daß jede Speichertorzugriffssteuerung 22, 24, 26 in fortlaufender Weise Zugriff zum Speicher 20 hat, falls mehr als eine Anforderung gleichzeitig vorliegen. Das Zurückhalten von Daten in den Zwischenspeichern 112A, B, C der Speichertorzugriffssteuerungen 22, 24, 26 stellt sicher, daß keine wesentlichen Verzögerungen oder Datenverluste auftreten.

Die Geschwindigkeiten des Speichers 20 und des Torwählers 28 garantieren dabei eine kritische Maximalantwortzeit für alle Schreib-/Leseanforderungen. Die tatsächliche Antwortzeit hängt von dem unverzüglichen Abarbeiten der Speichertorzugriffssteuerungen 22, 24, 26 und von der Anzahl anstehender noch nicht abgearbeiteter Anforderungen ab. Der Torwähler 28 arbeitet mit einer Taktfrequenz von ca. 6 MHz, so daß tatsächlich jede an den Towähler 28 angeschlossene Speichertorzugriffssteuerung durch den Anschluß zweier weiterer Speichertorzugriffssteuerungen beim Zugriff auf den Speicher 20 nicht behindert wird.

Somit erzielt Schnittstellenbaustein 10 einen schnellen Datenaustausch zwischen einem peripheren Endgerät 58 und dem Nachrichtenbus 68. Diese Geschwindigkeit wird dadurch erreicht, daß intern keine Datenkopien gemacht oder Daten übertragen werden müssen, da ein Datenaustausch nur zwischen dem Speicher 20 und dem beabsichtigten Endgerät stattfindet. Denn zwischen der Geräteanschlußschaltung 14 oder der Busanschlußschaltung 16 und dem Mikrocomputer 12 werden nur Unterbrechungs-und Kanalabrufsignale ausgetauscht, so daß der Mikrocomputer 12 die Daten nicht von Speicher zu Speicher kopiert, wodurch Zeit eingespart wird. Der Mikrocomputer 12 kopiert oder rückkopiert nur dann Daten, wenn er selbst als Datenendgerät, wenn z.B. eine Bearbeitung der Daten benötigt wird, angesteuert wird.

Folglich führt der Mikrocomputer 12 die minimal notwendige Menge an Steuerungen für die Adressen beim Übertragen von Daten vom Nachrichtenbus 68 zu einem Endgerät 58 und umgekehrt aus und fügt nur im kritischen Falle zusätzliche Steuer-oder Adresseninformation hinzu. Somit werden die tatsächlichen Daten in dem erfindungsgemäßen Schnittstellenbaustein 10 nicht kopiert.

Somit wird der Mikrocomputer 12 für alle Anwendungen und im Gegensatz zu bisherigen Nachrichtensystemen wirkungsvoll vom Datentransport zwischen dem Nachrichtenbus 68 und dem Endgerät 58,abgesehen vom Bereitstellen interner Informationen,entfernt. Darausfolgend können Daten sehr viel schneller zwischen der Quelle und dem Bestimmungsort übertragen werden.

Der hier beschriebene Schnittstellenbaustein 10 kann als einzelner Block für ein ganzes Nachrichtensubsystem verwendet werden, in dem der Schnittstellenbaustein 10 eine modulare Erweiterung des Nachrichtensubsystems mit maximal verteilter Steuerung bei minimalen Erweiterungskosten ermöglicht.

**Ansprüche**

1. Schnittstellenbaustein (10) der einen Mikrocomputer (12) und einen Speicher (20) aufweist, **dadurch gekennzeichnet**, daß er eine Geräteanschlußschaltung (14) und eine Busanschlußschaltung (16) enthält, daß der Mikrocomputer (12) über eine erste Speichertorzugriffssteuerung (22) und über zwei Unterbrechungsanforderungsleitungen (40, 42) sowie zwei Kanalabrufleitungen (44, 46) mit der Geräteanschlußschaltung (14) bzw. der Busanschlußschaltung (16) verbunden ist, daß die Geräteanschlußschaltung (14) über einen Bus (56) mit einer Vielzahl von peripheren Endgeräten (58) und über eine zweite Speichertorzugriffssteuerung (24) mit dem Speicher (20) verbunden ist, daß die Busanschlußschaltung (16) über eine Busschnittstelle (18) mit einem Nachrichtenbus (68) und über eine dritte Speichertorzugriffssteuerung (26) mit dem Speicher (20) verbunden ist, und daß die Speichertorzugriffssteuerungen (22, 24, 26) und der Speicher (20) mit einem Torwähler (28) verbunden sind, der die Reihenfolge des Zugriffs auf den Speicher (20) steuert.

2. Schnittstellenbaustein (10) nach Anspruch 1, dadurch gekennzeichnet, daß der Speicher (20) ein Adressentor (76) und ein Datentor (78) enthält und daß das Adressentor (76) über einen Adressenbus (82) mit Adressentoren (92A, B, C) der Speichertorzugriffssteuerungen (22, 24, 26) und das Datentor (78) über einen Datenbus (84) mit Datentoren (94A, B, C) der Speichertorzugriffssteuerungen (22, 24, 26) zum Austauschen von Adressen bzw. Daten verbunden ist.

3. Schnittstellenbaustein (10) nach Anspruch 1 oder 2, dadurch gekennzeichnet, daß der Torwähler (28) eine Zugriffssteuerung (88) aufweist, die mit einem Taktgenerator (90) verbunden ist, daß die Zugriffssteuerung (88) über einen Steuersignalbus (86) mit einem Steuersignaltor (80) des Speichers (20), über Freigabeleitungen (100) mit Freigabetoren (96A, B, C) der Speichertorzugriffssteuerungen (22, 24, 26) und über Lese-/Schreibanforderungsleitungen (102) mit Lese-/Schreibanforderungstoren (98A, B, C) der Speichertorzugriffssteuerungen (22, 24, 26) verbunden sind.

4. Schnittstellenbaustein (10) nach einem der vorhergehenden Ansprüche, dadurch gekennzeichnet, daß jede Speichertorzugriffssteuerung (22, 24, 26) einen Zwischenspeicher (112A, B, C) enthält, um zu übertragende Daten solange zwischenzuspeichern, bis ein Zugriff auf den Speicher (20) durch den Torwähler (28) freigegeben wird.

5. Schnittstellenbaustein (10) nach einem der vorhergehenden Ansprüchen, dadurch gekennzeichnet, daß an den Nachrichtenbus (68) wenigstens ein weiterer Schnittstellenbaustein (10) angeschlossen ist.

## F.IG. 1

E.P.Gerety 5-7.

FIG. 2

E. P. Geretz 5-75